# EUROPÄISCHE PATENTSCHRIFT

(11) **EP 0 360 093 B1**
(45) Veröffentlichungstag und Bekanntmachung des Hinweises auf die Patenterteilung: **02.06.1993**
(21) Anmeldenummer: 89116624.1
(22) Anmeldetag: 08.09.1989
(51) Int. Cl.: B01D 57/02

(54) **Verfahren zur Abtrennung von Salzen mittels Elektrodialyse**
Process for separating salts by electrodialysis
Procédé pour la séparation de sels au moyen d'électrodialyse

(30) Priorität: 20.09.1988 DE 3831848
(43) Veröffentlichungstag der Anmeldung: 28.03.1990
(73) Patentinhaber: BASF Aktiengesellschaft, 67063 Ludwigshafen (DE)
(72) Erfinder: Voss, Hartwig, Dr., D-6710 Frankenthal (DE)

(56) Entgegenhaltungen:
- EP-A- 0 167 107
- EP-A- 0 288 434
- DE-A- 2 805 891

## Beschreibung

Die vorliegende Erfindung betrifft ein neues Verfahren zur Abtrennung von Salzen aus wäßriger Lösung, wobei die wäßrige Lösung anionische organische Verbindungen enthält, mittels Elektrodialyse, indem man die wäßrige Lösung vor oder während der Salzabtrennung ansäuert.

Es ist bekannt, daß man z.B. salzhaltige Lösungen von anionischen Farbstoffen oder anionischen optischen Aufhellern mit Hilfe der Umkehrosmose oder der Ultrafiltration entsalzen kann. Diese druckgetriebenen Verfahren sind jedoch mit mehreren Nachteilen verbunden. An erster Stelle ist der zwangsläufig erforderliche hohe Druck (im allgemeinen 10 bis 100 bar) zu nennen, der zur Überwindung des osmotischen Drucks der zu entsalzenden Lösung benötigt wird. Außer der Energie zur Erzeugung und Aufrechterhaltung dieses Drucks, z. B. durch Pumpen, müssen entsprechend aufwendig gebaute Apparaturen eingesetzt werden, die diesem hohen Druck standhalten. Will man mit diesen Verfahren eine möglichst weitgehende Entsalzung erreichen, so muß der Vorgang nach Zusatz von entsalztem Wasser unter Umständen mehrfach wiederholt werden, wobei entsprechend große Mengen an Abwasser anfallen. Dieses Abwasser ist jedoch selbst bei Verwendung einer Membran, die beispielsweise ein Rückhaltevermögen für den Farbstoff von 99,5 % aufweist, deutlich verunreinigt.

Ein weiteres gravierendes Problem ist die Membranauswahl, insbesondere dann, wenn das Molekulargewicht der zu entsalzenden anionischen organischen Verbindung kleiner 1000 ist. Wählt man nämlich eine zu niedrige Trenngrenze, so lassen sich die Salze schlecht abtrennen. Wählt man sie aber zu hoch, so erfolgt zwar die Entsalzung mit hohem Permeatfluß und niedrigem transmembranem Druck, jedoch unter hohem Verlust an Wertprodukt. So weist beispielsweise eine Membran auf Basis Cellulose (z.B. CA 930 PP der Firma DDS) mit einer molekularen Trenngrenze von 500 (d.h. die Membran besitzt per Definition eine Rückhaltung von 90 % für ein organisches Wertprodukt mit einem Molekulargewicht von 500) eine Rückhaltung von 30 % für Natriumchlorid und eine Rückhaltung von 85 % für Natriumsulfat auf. Da aber das Rückhaltevermögen einer Membran nicht nur vom Molekulargewicht der zu entsalzenden Verbindung, sondern auch von deren chemischer Struktur und den in ihr enthaltenen funktionellen Gruppen abhängt, muß man für jedes Trennproblem die geeignete Membran finden.

Es ist auch bekannt, anorganische Salze mittels Elektrodialyse von wasserlöslichen Farbstoffen abzutrennen. Beispielsweise ist in der JP-A-55 923/1973 die Abtrennung von Natriumchlorid von wasserlöslichen Azofarbstoffen oder wasserlöslichen Fluoreszenzfarbstoffen beschrieben. Die Abtrennung von Alkali- und Erdalkalihalogeniden aus wäßrigen Lösungen von Reaktivfarbstoffen ist Gegenstand der EP-A-167 107 und der DE-A-3 424 506. Dabei wird die Lehre vermittelt, daß bei der Abtrennung der Halogenide keine Sulfationen zugegen sein sollten, da die gebildeten Sekundärmembranen infolge der großen Hydrathülle eine schlechte Durchlässigkeit für die Sulfationen aufweisen.

Aufgabe der vorliegenden Erfindung war es nun, ein neues Verfahren zur Abtrennung von Salzen mittels Elektrodialyse bereitzustellen, mittels dessen auch die Abtrennung von Sulfaten oder generell von Salzen mehrwertiger niedermolekularer Säuren möglich sein sollte.

Es wurde gefunden, daß die Abtrennung von Salzen mehrwertiger niedermolekularer Säuren aus wäßriger Lösung, wobei die wäßrige Lösung anionische organische Verbindungen enthält, mittels Elektrodialyse vorteilhaft gelingt, wenn man die wäßrige Lösung vor oder während der Salzabtrennung auf einen pH-Wert ansäuert, der kleiner ist als der Wert X+1, wobei X der pKₐ-Wert der 2. Dissoziationsstufe der mehrwertigen niedermolekularen Säure ist, die den abzutrennenden Salzen zugrundeliegt.

Anionische organische Verbindungen, von denen die Salze mehrwertiger niedermolekularer Säuren abgetrennt werden, sind vorzugsweise solche, deren Molekulargewicht mindestens 150, insbesondere mindestens 200 beträgt. Eine obere Grenze existiert prinzipiell nicht, da es mit dem erfindungsgemäßen Verfahren auch möglich ist, oligomere oder polymere organische Verbindungen, die anionisch modifiziert sind, zu entsalzen.

Als funktionelle Gruppen, die diesen organischen Verbindungen einen anionischen Charakter verleihen, kommen z.B. die Sulfonatgruppe (-SO₃^{⊖}), Sulfatogruppe (-O-SO₃^{⊖}), die Carboxylatgruppe (-COO^{⊖}) oder die Phosphonatgruppe (-PO₃^{2⊖}) in Betracht.

Geeignete anionische organische Verbindungen, die erfindungsgemäß entsalzt werden können, sind z.B. optische Aufheller, Farbstoffe (z.B. Mono-, Bis- oder Trisazofarbstoffe, Anthrachinonfarbstoffe, Dioxazinfarbstoffe, Phthalocyaninfarbstoffe, Chinophthalone oder Triphenylmethanfarbstoffe, wobei die Farbstoffe auch als Kupfer-, Chrom-, Kobalt-, Nickel- oder Eisenkomplexen vorliegen und/oder reaktive Gruppen, z.B. auf Chlortriazin- oder Vinylsulfonylbasis, aufweisen können) Mono- oder Polycarbonsäuren, Mono- oder Polysulfonsäuren oder Mono- oder Polyphosphonsäuren.

Besonders bevorzugt ist die Entsalzung von Lebensmittelfarbstoffen mittels des erfindungsgemäßen Verfahrens.

Als Salze von mehrwertigen niedermolekularen Säuren kommen z.B. die Alkali-, Erdalkali-, Ammonium-, Mono-, Di-, Tri- oder Tetraalkylammonium- oder Benzyltrialkylammoniumsalze der schwefligen Säure, Schwefelsäure, phosphorigen Säure, Phosphorsäure, Borsäure, Kohlensäure, Oxalsäure, Maleinsäure, Fumarsäure, Citronensäure oder Adipinsäure in Betracht.

Das Molekulargewicht des abzutrennenden Anions sollte im allgemeinen den Wert 150 nicht übersteigen.

Die Entsalzung von wäßrigen Salzlösungen mittels Elektrodialyse und entsprechende Elektrodialyseapparaturen sind an sich bekannt und z.B. in H. Strathmann "Trennung von molekularen Mischungen mit Hilfe synthetischer Membranen", Steinkopf Verlag, Darmstadt, 1979, S. 76 bis 86, und in D.S. Flett "Ion Exchange Membranes", Ellis Horwood, Chichester 1983, S. 179 bis 191, beschrieben.

Das erfindungsgemäße Verfahren wird zweckmäßig so durchgeführt, daß man zwischen zwei Elektroden alternierend Anionen- und Kationenaustauschermembranen parallel zueinander anordnet, die durch zwischengelegte Distanzrahmen gebildeten Kammern gegeneinander abdichtet und die angesäuerte, elektrolythaltige Lösung, die die anionische organische Verbindung enthält (im nachfolgenden auch als Diluat bezeichnet), durch diejenigen Kammern führt, die in Richtung der Anode durch eine Anionenaustauschermembran begrenzt werden, und eine wäßrige elektrolythaltige Lösung (im nachfolgenden auch als Konzentrat bezeichnet), deren Anfangsleitfähigkeit z.B. zwischen 1 mS/cm und 10 mS/cm liegt, zur Aufnahme des abzutrennenden Salzes durch diejenigen Kammern führt, die in Richtung der Anode durch eine Kationenaustauschermembran begrenzt werden. Als Elektrolyt wird im Konzentrat in der Regel das Salz, welches aus dem Diluat abgetrennt werden soll, die entsprechende Säure, eine Mischung aus beiden oder auch Natriumchlorid verwendet.

Von den Diluat- und Konzentratkammern durch die jeweils letzte Membran, vorzugsweise eine Kationenaustauschermembran, getrennt, befindet sich der Kathoden- und Anodenraum. An den Elektroden wird vorteilhaft während des Elektrodialyseprozesses eine elektrolythaltige Lösung vorbeigeführt, um entstehende Gase aus den Elektrodenkammern auszutragen. Als Elektrodenspülung verwendet man zweckmäßig eine wäßrige Natriumsulfatlösung mit einem Gehalt an Natriumsulfat von ca. 1 bis 10 Gew.%.

Als Ionenaustauschermembranen verwendet man handelsübliche für Anionen und Kationen selektive Membranen. Sie weisen im allgemeinen eine Permselektivität von größer als 0,9 und einen elektrischen Widerstand von kleiner als 5 Ω·cm² auf (Desalination, Band 34, S. 77 bis 95, 1980). Die Ionenaustauschermembranen bestehen im allgemeinen aus einer Trägerfolie oder einem Trägergewebe aus Polyester, Polyethylen oder Polyvinylchlorid, auf die fertige Austauscherharze aufgebracht werden oder auf denen das Austauscherharz erst in üblicher Weise polymerisiert und anschließend nach den üblichen Methoden weiterbehandelt wird, um Kationen- oder Anionenaustauscher zu erhalten (vgl. hierzu Ullmanns Enzyklopädie der technischen Chemie, 4. Aufl., Band 13, S. 279 ff., 1977). Insbesondere sind stark saure Kationenaustauscher oder stark basische Anionenaustauscher auf Basis vernetzter Copolymerprodukte des Styrols und Butadiens oder des Divinylbenzols, die durch Sulfonsäuregruppen oder quartäre Ammoniumgruppen modifiziert sind, auf einem Polyvinylchlorid-Stützgewebe zu nennen. Die im erfindungsgemäßen Verfahren zu verwendenden Ionenaustauschermembranen sind beispielsweise in Desalination (loc.cit.,) und der darin zitierten Literatur oder in Ullmann (loc.cit.) beschrieben.

Man elektrodialysiert beim erfindungsgemäßen Verfahren im allgemeinen bei einer Temperatur, die 100°C nicht übersteigt, vorzugsweise bei 15 bis 80°C, und mit einer Stromdichte, die in der Regel 3000 A/m² nicht übersteigt, vorzugsweise mit 10 bis 1000 A/m². Dabei kann insbesondere am Ende der Entsalzung die Grenzstromdichte der Konzentrationspolarisation ohne Nachteil überschritten werden. Die für den Elektrolyttransport durch die Membranen erforderliche Gleichspannung richtet sich dabei nach Art und Konzentration der Elektrolyte und der anionischen organischen Verbindung in der zu entsalzenden Lösung. Ein weiterer Faktor ist der Membranabstand, der durch die Distanzrahmenkonstruktion der Elektrodialysezelle gegeben ist. Bedingt durch den elektrischen Widerstand der Elektrodialysezelle ergeben sich bei den obengenannten Stromdichten Spannungen bis zu 5 V pro Teilzelle, wobei eine Teilzelle aus einer Diluatkammer, einer Konzentratkammer einer Anionen-und einer Kationenaustauschermembran besteht.

Das erfindungsgemäße Verfahren kann sowohl kontinuierlich in mehreren hintereinander geschalteten Membranstapeln als auch diskontinuierlich durch Kreislaufführung der Flüssigkeitsströme mit Puffergefäßen oder durch Mischformen dieser Verfahrensarten ausgeführt werden.

Das Ansäuren der wäßrigen Lösung, aus der die Salze der mehrwertigen niedermolekularen Säuren abgetrennt werden sollen, geschieht dabei entweder vor oder während des Vorgangs der Elektrodialyse.

Als Säuren, die zum Ansäuren der wäßrigen Lösung geeignet sind, kommen z.B. anorganische Säuren, wie Halogenwasserstoffsäuren (Fluorwasserstoffsäure, Salzsäure, Bromwasserstoffsäure oder Iodwasserstoffsäure), Perchlorsäure, Schwefelsäure, Salpetersäure, Phosphorsäure oder phosphorige Säure, oder organische Säuren, wie Ameisensäure, Essigsäure, Oxalsäure, Mono-, Di- oder Trifluoressigsäure, Mono- oder Dichloressigsäure, Monobromessigsäure oder Alkansulfonsäuren, z.B. Methansulfonsäure in Betracht.

Vorzugsweise ist die wäßrige Lösung auf einen pH-Wert anzusäuern, der X-2 bis X beträgt, wobei X jeweils die obengenannte Bedeutung besitzt.

Bei der Abtrennung von Sulfationen bedeutet dies z.B., daß auf einen pH-Wert von ≦ 2,9 angesäuert werden muß, da der pKₐ-Wert der 2. Dissoziationsstufe von Schwefelsäure 1,92 beträgt.

Bei der Abtrennung von Oxalationen bedeutet dies z.B., daß auf einen pH-Wert von ≦ 5,2 angesäuert werden muß, da der pKₐ-Wert der 2. Dissoziationsstufe von Oxalsäure 4,19 beträgt.

Aus den obigen Ausführungen ergibt sich auch, daß die Säure, die zum Ansäuren der wäßrigen Lösung verwendet wird, nicht frei wählbar ist, sondern, daß die Wahl dieser Säure abhängig ist von der Art der Salze der mehrwertigen niedermolekularen Säuren, die abgetrennt werden sollen. So muß nämlich der pKₐ-Wert (bei mehrwertigen Säuren, derjenige der 1. Dissoziationsstufe) der Säure mit der angesäuert wird, kleiner sein als der pKₐ-Wert der 2. Dissoziationsstufe der mehrwertigen niedermolekualaren Säure, die den abzutrennenden Salzen zugrundeliegt. Daraus folgt, daß es beispielsweise möglich ist, Natriumsulfat nach dem Ansäuern mit Schwefeisäure aus einer entsprechenden Lösung abzutrennen.

Nach Abbruch der Elektrodialyse ist in der wäßrigen Lösung, die die anionische organische Verbindung enthält, eine deutliche Abnahme der Salze die abgetrennt werden sollen, zu beobachten. Bei ausreichender Elektrodialysedauer ist die Abtrennung in den meisten Fällen quantitativ.

Mittels des erfindungsgemäßen Verfahrens gelingt es überraschenderweise, solche Salze aus wäßrigen Lösungen, die anionische organische Verbindungen enthalten, zu entfernen, die bisher mittels Elektrodialyse als nicht abtrennbar galten.

Die folgenden Beispiele sollen die Erfindung näher erläutern.

### Versuchsanordnung und allgemeine Versuchsbeschreibung

Die Apparatur besteht aus einer Elektrodialyse-Zelle (ED-Zelle) und drei Kreisläufen (Diluat-, Konzentrat- und Elektrodenspülkreislauf). Jeder dieser Kreisläufe ist mit einer Magnetkreiselpumpe, einem Wärmetauscher und einem Vorratsbehälter (1 bis 10 l) ausgerüstet und über Schläuche mit der ED-Zelle verbunden.

Die Ed-Zelle hat zwei Platinelektroden, die jeweils eine Fläche von 35 cm² aufweisen. Die Elektrodenräume sind von den angrenzenden Konzentratkammern durch Nafion® Kationenaustauschermembranen (Firma Du Pont) abgetrennt. Zwischen den Elektrodenkammern befinden sich 11 Konzentrat- und 10 Diluatkammern in alternierender Anordnung. Die Kammern sind voneinander abwechselnd durch Selemion® AMV und Selemion CMV Membranen (Fa. Asahi Glass) getrennt. Alle Membranen haben eine aktive Fläche von 37 cm². Die Membranabstände betragen 3 mm. Zulauf und Ablauf der jeweiligen Lösungen wird durch entsprechende Verbindungsbohrungen in den Dichtrahmen und Endplatten sowie Anschluß an die entsprechenden Pumpkreise erreicht.

Die Apparatur ist mit einer Gleichstromversorgung mit Geräten zur Messung von Temperatur, pH- Wert, Spannung, Strom und Leitfähigkeit sowie mit einer pH-Wert-gesteuerten Säuredosierung ausgestattet.

Die Entsalzungen erfolgten in Batchfahrweise.

Die Kreisläufe der Elektrodialyseapparatur wurden mit den folgenden Lösungen beschickt:
- Diluat:: 1-2 kg einer Lösung, die neben der wasserlöslichen anionischen organischen Verbindung (im folgenden als Wertprodukt bezeichnet) Salze mehrwertiger niedermolekularer Säuren enthielt.
- Konzentrat:: 1-2 kg einer wäßrigen Elektrolytlösung mit einer spezifischen Leitfähigkeit von ca. 10 mS/cm. Als Elektrolyt wurde in der Regel das abzutrennende Salz verwendet. (Aber auch andere Elektrolyte, z.B. die dem abzutrennenden Salz zugrundeliegende Säure oder die Säure, die dosiert werden soll, sind verwendbar.)
- Elektrodenspüllösung:: 2 kg einer 5 gew.%igen Na₂SO₄-Lösung.

Die Lösungen wurden im Kreis über die ED-Zelle gepumpt und bei 25-40°C mit einer Zellspannung bis zu 60 V sowie einem Elektrodialysestrom bis zu 3 A elektrodialysiert. Die Dosierung der Säure erfolgte einmalig zu Beginn oder kontinuierlich (pH-Wert-gesteuert) während der Elektrodialyse, nach dem zu Anfang auf den gewünschten pH-Wert angesäuert worden war. Die Durchflußmengen für Diluat und Konzentrat betrugen ca. 3 kg/min.

Der Verlauf von Strom und Spannung ergab sich je nach System aus dem sich ändernden Widerstand der ED-Anordnung. Unterhalb von 60 V Zellspannung war ein Strom von 3 A möglich; wurden 60 V aufgrund eines Anstiegs des Widerstands während der ED erreicht, ging der Strom entsprechend zurück.

Nach 3,5 bis 28 Stunden wurde die Elektrodialyse abgebrochen. Die Abreicherung des mehrwertigen Anions betrug bis zu 99 % (wobei als 100 % die im Diluat eingesetzte Anionenmenge des abzutrennenden Salzes vor der Säuredosierung gesetzt wird), der Wertproduktverlust in das Konzentrat in der Regel weniger als 1 %, maximal 4 %. Das Wertprodukt wurde dabei um einen Faktor von bis zu 1,3 aufkonzentriert.

Die folgenden Beispiele wurden gemäß der allgemeinen Beschreibung durchgeführt. Als Vergleichsbeispiel gekennzeichnete Versuche erfolgten ohne Säuredosierung unter sonst identischen Bedingungen.

### Beispiel 1

- Wertprodukt:: C.I. Acid Yellow 3
- abzutrennendes Salz:: Na₂SO₄ und NaCl
- Diluateinsatz:: Menge = 2,2 kg
Wertproduktkonzentration = 10,7 %
SO₄^{2⊖}-Konzentration = 1,1 %
Cl^{⊖}-Konzentration = 3,1 %
- Fahrweise:: kontinuierlich mit 17,2 g 36 gew.%iger HCl auf einen pH-Wert von 2,0 angesäuert
Entsalzungstemperatur = 25°C
Elektrodialysedauer = 8 h
- Ergebnis:: Wertproduktausbeute > 99 %
SO₄^{2⊖}-Abreicherung = 75 %
Cl^{⊖}-Abreicherung > 99 %.

### Beispiel 2

- Wertprodukt:: C.I. Acid Yellow 3
- abzutrennendes Salz:: Na₂SO₄ und NaCl
- Diluateinsatz:: Menge = 2,0 kg
Wertproduktkonzentration = 10,7 %
SO₄^{2⊖}-Konzentration = 1,1 %
Cl^{⊖}-Konzentration = 3,1 %
- Fahrweise:: kontinuierlich mit 162 g 36 gew.%iger HCl auf einen pH-Wert von 1,0 angesäuert
Entsalzungstemperatur = 25°C
Elektrodialysedauer = 8 h
- Ergebnis:: Wertproduktausbeute > 99 %
SO₄^{2⊖}-Abreicherung = 98 %
Cl^{⊖}-Abreicherung > 99 %.

### Beispiel 3 (Vergleichsbeispiel zu Beispiel 1 und 2)

- Wertprodukt:: C.I. Acid Yellow 3
- abzutrennendes Salz:: Na₂SO₄ und NaCl
- Diluateinsatz:: Menge = 2,2 kg
Wertproduktkonzentration = 10,7 %
SO₄^{2⊖}-Konzentration = 1,1 %
Cl^{⊖}-Konzentration = 3,1 %
- Fahrweise:: keine Säuredosierung
(Start-pH-Wert = 9,0; End-pH-Wert = 6,6)
Entsalzungstemperatur = 25°C
Elektrodialysedauer = 8 h
- Ergebnis:: Wertproduktausbeute > 99 %
SO₄^{2⊖}-Abreicherung = 32 %
Cl^{⊖}-Abreicherung > 99 %.

### Beispiel 4

- Wertprodukt:: C.I. Acid Blue 9
- abzutrennendes Salz:: Na₂SO₄
- Diluateinsatz:: Menge = 1,9 kg
Wertproduktkonzentration = 19,0 %
SO₄^{2⊖}-Konzentration = 1,6 %
- Fahrweise:: kontinuierlich mit 165 g 36 gew.%iger HCl auf einen pH-Wert von 1,0 angesäuert
Entsalzungstemperatur = 40°C
Elektrodialysedauer = 8 h
- Ergebnis:: Wertproduktausbeute > 99 %
SO₄^{2⊖}-Abreicherung = 97 %
Cl^{⊖}-Gehalt im
Diluataustrag < 0,03 %.

### Beispiel 5 (Vergleichsbeispiel zu Beispiel 4)

- Wertprodukt:: C.I. Acid Blue 9
- abzutrennendes Salz:: Na₂SO₄
- Diluateinsatz:: Menge = 2,0 kg
Wertproduktkonzentration = 19,0 %
SO₄^{2⊖}-Konzentration = 1,6 %
- Fahrweise:: keine Säuredosierung
(Start-pH-Wert = 6,7; End-pH-Wert = 6,2)
Entsalzungstemperatur = 40°C
Elektrodialysedauer = 8 h
- Ergebnis:: Wertproduktausbeute > 99 %
SO₄^{2⊖}-Abreicherung = 10 %.

### Beispiel 6

- Wertprodukt:: C.I. Acid Blue 9
- abzutrennendes Salz:: Na₂SO₄
- Diluateinsatz:: Menge = 1,6 kg
Wertproduktkonzentration = 23,8 %
SO₄^{2⊖}-Konzentration = 2,4 %
- Fahrweise:: kontinuierlich mit 43 g 96 gew.%iger H₂SO₄ auf einen pH-Wert von 1,0 angesäuert
Entsalzungstemperatur = 35°C
Elektrodialysedauer = 8 h
- Ergebnis:: Wertproduktausbeute > 99 %
SO₄^{2⊖}-Abreicherung = 67 %.

### Beispiel 7

- Wertprodukt:: C.I. Acid Blue 9
- abzutrennendes Salz:: Na₂SO₄
- Diluateinsatz:: Menge = 1,5 kg
Wertproduktkonzentration = 23,8 %
SO₄^{2⊖}-Konzentration = 2,4 %
- Fahrweise:: einmalig mit 55 g 96 gew.%iger H₂SO₄ auf einen pH-Wert von 0,8 angesäuert
(End-pH-Wert = 1,0)
Entsalzungstemperatur = 35°C
Elektrodialysedauer = 8 h
- Ergebnis:: Wertproduktausbeute > 99 %
SO₄^{2⊖}-Abreicherung = 69 %.

### Beispiel 8 (Vergleichsbeispiel zu Beispiel 6 und 7)

- Wertprodukt:: C.I. Acid Blue 9
- abzutrennendes Salz:: Na₂SO₄
- Diluateinsatz:: Menge = 1,5 kg
Wertproduktkonzentration = 23,8 %
SO₄^{2⊖}-Konzentration = 2,4 %
- Fahrweise:: keine Säuredosierung
(Start-pH-Wert = 6,9; End-pH-Wert = 4,1)
Entsalzungstemperatur = 35°C
Elektrodialysedauer = 8 h
- Ergebnis:: Wertproduktausbeute > 99 %
SO₄^{2⊖}-Abreicherung = 1,5 %.

### Beispiel 9

- Wertprodukt:: C.I. Acid Blue 9
- abzutrennendes Salz:: Na₂SO₄
- Diluateinsatz:: Menge = 1,5 kg
Wertproduktkonzentration = 24,2 %
SO₄^{2⊖}-Konzentration = 3,6 %
- Fahrweise:: einmalig mit 58 g 96 gew.%iger H₂SO₄ auf einen pH-Wert von 0,8 angesäuert (End-pH-Wert = 1,1)
Entsalzungstemperatur = 35°C
Elektrodialysedauer = 19,5 h
- Ergebnis:: Wertproduktausbeute > 99 %
SO₄^{2⊖}-Abreicherung = 96 %.

### Beispiel 10

- Wertprodukt:: C.I. Acid Blue 9
- abzutrennendes Salz:: Na₃PO₄
- Diluateinsatz:: Menge = 1,5 kg
Wertproduktkonzentration = 16,7 %
PO₄^{3⊖}-Konzentration = 1,8 %
- Fahrweise:: einmalig mit 80 g 85 gew.%iger H₃PO₄ auf einen pH-Wert von 2,9 angesäuert (End-pH-Wert = 2,0)
Entsalzungstemperatur = 35°C
Elektrodialysedauer = 24 h
- Ergebnis:: Wertproduktausbeute ≧ 99 %
PO₄^{3⊖}-Abreicherung = 91 %.

### Beispiel 11 (Vergleichsbeispiel zu Beispiel 10)

- Wertprodukt:: C.I. Acid Blue 9
- abzutrennendes Salz:: Na₃PO₄
- Diluateinsatz:: Menge = 1,6 kg
Wertproduktkonzentration = 16,7 %
PO₄^{3⊖}-Konzentration = 1,8 %
- Fahrweise:: keine Säuerdosierung
(Start-pH-Wert = 11,5; End-pH-Wert = 11,3)
Entsalzungstemperatur = 35°C
Elektrodialysedauer = 24 h
- Ergebnis:: Wertproduktausbeute ≧ 99 %
PO₄^{3⊖}-Abreicherung = 23 %.

### Beispiel 12

- Wertprodukt:: C.I. Acid Blue 9
- abzutrennendes Salz:: Na₂C₂O₄ (Natriumoxalat)
- Diluateinsatz:: Menge = 1,5 kg
Wertproduktkonzentration = 17,4 %
C₂O₄^{2⊖}-Konzentration = 1,3 %
- Fahrweise:: einmalig mit 17 g 36 gew.%iger HCl auf einen pH-Wert von 2,8 angesäuert
(End-pH-Wert = 2,2)
Entsalzungstemperatur = 34°C
Elektrodialysedauer = 10 h
- Ergebnis:: Wertproduktausbeute ≧ 99 %
C₂O₄^{2⊖}-Abreicherung = 99 %
Cl^{⊖}-Gehalt im
Diluataustrag < 0,004 %.

### Beispiel 13 (Vergleichsbeispiel zu Beispiel 12)

- Wertprodukt:: C.I. Acid Blue 9
- abzutrennendes Salz:: Na₂C₂O₄ (Natriumoxalat)
- Diluateinsatz:: Menge = 1,5 kg
Wertproduktkonzentration = 17,4 %
C₂O₄^{2⊖}-Konzentration = 1,3 %
- Fahrweise:: keine Säuredosierung
(Start-pH-Wert = 6,3; End-pH-Wert = 6,0)
Entsalzungstemperatur = 34°C
Elektrodialysedauer = 10 h
- Ergebnis:: Wertproduktausbeute ≧ 99 %
C₂O₄^{2⊖}-Abreicherung = 67 %.

### Beispiel 14

- Wertprodukt:: C.I. Acid Blue 74
- abzutrennendes Salz:: Na₂SO₄
- Diluateinsatz:: Menge = 1,5 kg
Wertproduktkonzentration = 5,4 %
SO₄^{2⊖}-Konzentration = 2,3 %
- Fahrweise:: kontinuierlich mit 28 g 96 gew.%iger H₂SO₄ auf einen pH-Wert von 1,0 angesäuert
Entsalzungstemperatur = 34°C
Elektrodialysedauer = 28 h
- Ergebnis:: Wertproduktausbeute ≧ 99 %
SO₄^{2⊖}-Abreicherung = 71 %.

### Beispiel 15 (Vergleichsbeispiel zu Beispiel 14)

- Wertprodukt:: C.I. Acid Blue 74
- abzutrennendes Salz:: Na₂SO₄
- Diluateinsatz:: Menge = 1,6 kg
Wertproduktkonzentration = 5,4 %
SO₄^{2⊖}-Konzentration = 2,3 %
- Fahrweise:: keine Säuredosierung
(Start-pH-Wert = 3,6; End-pH-Wert = 3,3)
Entsalzungstemperatur = 34°C
Elektrodialysedauer = 28 h
- Ergebnis:: Wertproduktausbeute ≧ 99 %
SO₄^{2⊖}-Abreicherung = 18 %.

### Beispiel 16

- Wertprodukt:: C.I. Acid Red 18
- abzutrennendes Salz:: Na₂SO₄ und NaCl
- Diluateinsatz:: Menge = 1,5 kg
Wertproduktkonzentration = 7,3 %
SO₄^{2⊖}-Konzentration = 2,2 %
Cl^{⊖}-Konzentration = 0,6 %
- Fahrweise:: kontinuierlich mit 50 g 96 gew.%iger H₂SO₄ auf einen pH-Wert von 1,0 angesäuert
Entsalzungstemperatur = 38°C
Elektrodialysedauer = 18 h
- Ergebnis:: Wertproduktausbeute ≧ 99 %
SO₄^{2⊖}-Abreicherung = 85 %
Cl^{⊖}-Abreicherung > 99 %.

### Beispiel 17 (Vergleichsbeispiel zu Beispiel 16)

- Wertprodukt:: C.I. Acid Red 18
- abzutrennendes Salz:: Na₂SO₄ und NaCl
- Diluateinsatz:: Menge = 1,5 kg
Wertproduktkonzentration = 7,3 %
SO₄^{2⊖}-Konzentration = 2,2 %
Cl^{⊖}-Konzentration = 0,6 %
- Fahrweise:: keine Säuerdosierung
(Start-pH-Wert = 6; End-pH-Wert = 5)
Entsalzungstemperatur = 38°C
Elektrodialysedauer = 18 h
- Ergebnis:: Wertproduktausbeute ≧ 99 %
SO₄^{2⊖}-Abreicherung = 7 %
Cl^{⊖}-Abreicherung = 99 %.

### Beispiel 18

- Wertprodukt:: C.I. Acid Red 18
- abzutrennendes Salz:: Na₂C₂O₄(Natriumoxalat) und Na₂SO₄
- Diluateinsatz:: Menge = 1,1 kg
Wertproduktkonzentration = 8,9 %
C₂O₄^{2⊖}-Konzentration = 1,8 %
SO₄^{2⊖}-Konzentration = 0,8 %
- Fahrweise:: kontinuierlich mit 31 g 36 gew.%iger HCl auf einen pH-Wert von 2,0 angesäuert
Entsalzungstemperatur = 35°C
Elektrodialysedauer = 9 h
- Ergebnis:: Wertproduktausbeute > 99 %
C₂O₄^{2⊖}-Abreicherung = 96 %
SO₄^{2⊖}-Abreicherung = 50 %
Cl^{⊖}-Gehalt im
Diluataustrag = 0,01 %.

### Beispiel 19 (Vergleichsbeispiel zu Beispiel 18)

- Wertprodukt:: C.I. Acid Red 18
- abzutrennendes Salz:: Na₂C₂O₄ (Natriumoxalat) und Na₂SO₄
- Diluateinsatz:: Menge = 1,0 kg
Wertproduktkonzentration = 8,9 %
C₂O₄^{2⊖}-Konzentration = 1,8 %
SO₄^{2⊖}-Konzentration = 0,8 %
- Fahrweise:: keine Säuredosierung
(Start-pH-Wert = 9; End-pH-Wert = 7)
Entsalzungstemperatur = 35°C
Elektrodialysedauer = 9 h
- Ergebnis:: Wertproduktausbeute > 99 %
C₂O₄^{2⊖}-Abreicherung = 3 %
SO₄^{2⊖}-Abreicherung = 3%.

### Beispiel 20

- Wertprodukt:: C.I. Acid Yellow 23
- abzutrennendes Salz:: Na₂SO₄ und NaCl
- Diluateinsatz:: Menge = 1,5 kg
Wertproduktkonzentration = 4,5 %
SO₄^{2⊖}-Konzentration = 2,4 %
Cl^{⊖}-Konzentration = 0,7 %
- Fahrweise:: kontinuierlich mit 46 g 96 gew.%iger H₂SO₄ auf einen pH-Wert von 1,0 angesäuert
Entsalzungstemperatur = 35°C
Elektrodialysedauer = 17 h
- Ergebnis:: Wertproduktausbeute ≧ 98 %
SO₄^{2⊖}-Abreicherung = 78 %
Cl^{⊖}-Abreicherung = 99 %.

### Beispiel 21 (Vergleichsbeispiel zu Beispiel 20)

- Wertprodukt:: C.I. Acid Yellow 23
- abzutrennendes Salz:: Na₂SO₄ und NaCl
- Diluateinsatz:: Menge = 1,5 kg
Wertproduktkonzentration = 4,5 %
SO₄^{2⊖}-Konzentration = 2,4 %
Cl^{⊖}-Konzentration = 0,7 %
- Fahrweise:: keine Säuredosierung
(Start-pH-Wert = 8,6; End-pH-Wert = 7,4)
Entsalzungstemperatur = 35°C
Elektrodialysedauer = 17 h
- Ergebnis:: Wertproduktausbeute ≧ 98 %
SO₄^{2⊖}-Abreicherung = 18 %
Cl^{⊖}-Abreicherung = 98 %.

### Beispiel 22

- Wertprodukt:: C₉/C₁₁-n-Alkylsulfonat
- abzutrennendes Salz:: Na₂SO₄
- Diluateinsatz:: Menge = 1,0 kg
Wertproduktkonzentration = 26,8 %
SO₄^{2⊖}-Konzentration = 4,1 %
- Fahrweise:: kontinuierlich mit 26 g 96 gew.%iger H₂SO₄ auf einen pH-Wert von 1,0 angesäuert
Entsalzungstemperatur = 35°C
Elektrodialysedauer = 7 h
- Ergebnis:: Wertproduktausbeute = 96 %
SO₄^{2⊖}-Abreicherung = 74 %.

### Beispiel 23 (Vergleichsbeispiel zu Beispiel 22)

- Wertprodukt:: C₉/C₁₁-n-Alkylsulfonat
- abzutrennendes Salz:: Na₂SO₄
- Diluateinsatz:: Menge = 1,0 kg
Wertproduktkonzentration = 26,8 %
SO₄^{2⊖}-Konzentration = 4,1 %
- Fahrweise:: keine Säuredosierung
(Start-pH-Wert = 2,6; End-pH-Wert = 2,9)
Entsalzungstemperatur = 35°C
Elektrodialysedauer = 7 h
- Ergebnis:: Wertproduktausbeute = 93 %
SO₄^{2⊖}-Abreicherung = 10 %.

### Beispiel 24

- Wertprodukt:: C.I. Reactive Blue 233
- abzutrennendes Salz:: Na₂SO₄ und NaCl
- Diluateinsatz:: Menge = 1,0 kg
Wertproduktkonzentration = 11,2 %
SO₄^{2⊖}-Konzentration = 1,1 %
Cl^{⊖}-Konzentration = 1,8 %
- Fahrweise:: kontinuierlich mit 82 g 36 gew.%iger HCl auf einen pH-Wert von 1,0 angesäuert
Entsalzungstemperatur = 35°C
Elektrodialysedauer = 4,5 h
- Ergebnis:: Wertproduktausbeute > 99 %
SO₄^{2⊖}-Abreicherung = 79 %
Cl^{⊖}-Abreicherung = 96 %.

### Beispiel 25 (Vergleichsbeispiel zu Beispiel 24)

- Wertprodukt:: C.I. Reactive Blue 233
- abzutrennendes Salz:: Na₂SO₄ und NaCl
- Diluateinsatz:: Menge = 1,0 kg
Wertproduktkonzentration = 11,2 %
SO₄^{2⊖}-Konzentration = 1,1 %
Cl^{⊖}-Konzentration = 1,8 %
- Fahrweise:: keine Säuredosierung
(Start-pH-Wert = 6,3; End-pH-Wert = 6,2).
Entsalzungstemperatur = 35°C
Elektrodialysedauer = 4,5 h
- Ergebnis:: Wertproduktausbeute > 99 %
SO₄^{2⊖}-Abreicherung = 0 %
Cl^{⊖}-Abreicherung = 95 %.

### Beispiel 26

- Wertprodukt:: C.I. Reactive Yellow 145
- abzutrennendes Salz:: Na₂SO₄ und NaCl
- Diluateinsatz:: Menge = 1,0 kg
Wertproduktkonzentration = 6,7 %
SO₄^{2⊖}-Konzentration = 2,4 %
Cl^{⊖}-Konzentration = 1,6 %
- Fahrweise:: kontinuierlich mit 78 g 36 gew.%iger HCl auf einen pH-Wert von 1,0 angesäuert
Entsalzungstemperatur = 35°C
Elektrodialysedauer = 6 h
- Ergebnis:: Wertproduktausbeute > 99 %
SO₄^{2⊖}-Abreicherung = 86 %
Cl^{⊖}-Abreicherung = 96 %.

### Beispiel 27 (Vergleichsbeispiel zu Beispiel 26)

- Wertprodukt:: C.I. Reactive Yellow 145
- abzutrennendes Salz:: Na₂SO₄ und NaCl
- Diluateinsatz:: Menge = 1,0 kg
Wertproduktkonzentration = 6,7 %
SO₄^{2⊖}-Konzentration = 2,4 %
Cl^{⊖}-Konzentration = 1,6 %
- Fahrweise:: keine Säuredosierung
(Start-pH-Wert = 6,0; End-pH-Wert = 6,5)
Entsalzungstemperatur = 35°C
Elektrodialysedauer = 6 h
- Ergebnis:: Wertproduktausbeute > 99 %
SO₄^{2⊖}-Abreicherung = 13 %
Cl^{⊖}-Abreicherung > 99 %.

### Beispiel 28

- Wertprodukt:: C.I. Reactive Black 5
- abzutrennendes Salz:: Na₂SO₄
- Diluateinsatz:: Menge = 1,0 kg
Wertproduktkonzentration = 6,3 %
SO₄^{2⊖}-Konzentration = 2,2 %
- Fahrweise:: kontinuierlich mit 66 g 36 gew.%iger HCl auf einen pH-Wert von 1,0 angesäuert
Entsalzungstemperatur = 35°C
Elektrodialysedauer = 3,5 h
- Ergebnis:: Wertproduktausbeute > 99 %
SO₄^{2⊖}-Abreicherung = 55 %
Cl^{⊖}-Gehalt im
Diluataustrag < 0,01 %.

### Beispiel 29 (Vergleichsbeispiel zu Beispiel 28)

- Wertprodukt:: C.I. Reactive Black 5
- abzutrennendes Salz:: Na₂SO₄
- Diluateinsatz:: Menge = 1,0 kg
Wertproduktkonzentration = 6,3 %
SO₄^{2⊖}-Konzentration = 2,2 %
- Fahrweise:: keine Säuredosierung
(Start-pH-Wert = 4,2; End-pH-Wert = 4,4)
Entsalzungstemperatur = 35°C
Elektrodialysedauer = 3,5 h
- Ergebnis:: Wertproduktausbeute > 99 %
SO₄^{2⊖}-Abreicherung = 2 %.

## Patentansprüche

1. Verfahren zur Abtrennung von Salzen mehrwertiger niedermolekularer Säuren aus wäßriger Lösung, wobei die wäßrige Lösung anionische organische Verbindungen enthält, mittels Elektrodialyse, dadurch gekennzeichnet, daß man die wäßrige Lösung vor oder während der Salzabtrennung auf einen pH-Wert ansäuert, der kleiner ist als der Wert X+1, wobei X der pKₐ-Wert der 2. Dissoziationsstufe der mehrwertigen niedermolekularen Säure ist, die den abzutrennenden Salzen zugrundeliegt.

2. Verfahren nach Anspruch 1, dadurch gekennzeichnet, daß man die wäßrige Lösung auf einen pH-Wert ansäuert, der X-2 bis X beträgt, wobei X die in Anspruch 1 genannte Bedeutung besitzt.

## Claims

1. A process for removing a salt of a polybasic low molecular weight acid by electrodialysis from an aqueous solution which contains an anionic organic compound, which comprises acidifying the aqueous solution before or during salt removal to a pH which is less than the value X+1, where X is the pKₐ of the second dissociation stage of the polybasic low molecular weight acid whose salt is to be removed.

2. A process as claimed in claim 1, wherein the aqueous solution is acidified to a pH which is from X-2 to X, where X has the meaning stated in claim 1.

## Revendications

1. Procédé de séparation, par voie d'électrodialyse, de sels de polyacides inférieurs d'avec leur solution aqueuse, la solution aqueuse contenant des composés organiques anioniques, caractérisé en ce qu'avant ou pendant la séparation des sels, on acidifie la solution aqueuse à une valeur du pH qui est inférieure à la valeur X + 1, X étant le pKₐ du 2ème degré de dissociation du polyacide inférieur qui est à la base des sels à séparer.

2. Procédé selon la revendication 1, caractérisé en ce qu'on acidifie la solution aqueuse à une valeur du pH qui est comprise entre X - 2 et X, X ayant la signification indiquée dans la revendication 1.
